# EUROPEAN PATENT APPLICATION

(11) **EP 3 793 069 A1**
(43) Date of publication of application: **17.03.2021**
(21) Application number: 19197248.8
(22) Date of filing: 13.09.2019
(51) Int. Cl.: H02K 3/47, H02K 41/03, B66B 7/00, B66B 9/00, B66B 11/04

(54) **LINEAR MOTOR AND ELEVATOR**

(71) Applicant: KONE Corporation, 00330 Helsinki (FI)
(72) Inventor: HAKALA, Tero, 00330 HELSINKI (FI); KORHONEN, Tuukka, 00330 HELSINKI (FI); MINKKINEN, Marko, 00330 HELSINKI (FI)
(74) Representative: Berggren Oy, Helsinki & Oulu

(57) **Abstract**

Linear motors (10) and elevators (100) are presented in this document. A linear motor (10) comprises a stator (20) and a mover (15) adapted to move along the stator (20), one of them (20, 15) comprising non-magnetic core coils (25) arranged in a row (24) in a longitudinal direction (Z). Further, the other of the stator (20) and the mover (15) comprises permanent magnets (28) arranged in at least two adjacent rows (27) in a longitudinal direction (Z), wherein the rows of permanent magnets (27) are separated by a gap(s) dimensioned for receiving the row(s) of coils (24). Still further, at least one of the rows of permanent magnets (27) may be arranged in a form of Halbach array (40). The elevator (100) may comprise an elevator shaft (30) and an elevator car (5) arranged to be moved by the linear motor (10) in the elevator shaft (30).

## Description

### FIELD OF THE INVENTION

The present invention relates in general to elevators. In particular, however not exclusively, the present invention concerns a linear motor for an elevator, for a conveyor, such as an escalator, for a moving walk, or for an inclined elevator.

### BACKGROUND

There are known elevators with linear motors arranged to move an elevator car in the elevator shaft. in the known solutions, the stator of the linear motor comprises coils with magnetic cores.

One drawback in the known attempts is that the stator becomes very heavy and costly due to having lots of magnetic core material therein. Furthermore, the stator has a complex structure due to the magnetic cores in the coils. This is especially problematic in elevators having long elevator shafts, for example, in tall buildings. Furthermore, the magnetic cores cause transverse forces in the motor which must be compensated. Thus, there is still a need to develop linear motors used in elevators.

### SUMMARY

An objective of the present invention is to provide a linear motor and an elevator. Another objective of the present invention is that the linear motor and the elevator at least alleviate some of the drawbacks in the known elevators.

The objectives of the invention are reached by a linear motor and an elevator as defined by the respective independent claims.

According to a first aspect, a linear motor is provided. The linear motor comprises a stator and a mover adapted to move along the stator. One of the stator and the mover comprises a plurality of non-magnetic core coils, such as air core coils, arranged in at least one row of coils in a longitudinal direction of the one of the stator and the mover. Furthermore, the other of the stator and the mover comprises permanent magnets arranged in at least two adjacent rows of permanent magnets in a longitudinal direction of the other of the stator and the mover, wherein the adjacent rows of permanent magnets are separated by a gap dimensioned for receiving the at least one of row of coils.

It is to be understood that the gap must be dimensioned such that it enables movement of the rows of permanent magnets and the rows of coils relative to each other. Thus, in various embodiments, there is an air gap between said rows.

Optionally, at least one of the adjacent rows of permanent magnets may be arranged, such as at least partly or substantially completely, in a form of Halbach array including a strong side and a weak side, wherein the strong side is arranged to face the at least one row of coils.

A Halbach array refers herein to an arrangement of permanent magnets that augments the magnetic field on one side of the array, that is on the strong side, while cancelling the field to near zero, or at least generating a lower field with respect to the strong side, on the other side, that is on the weak side. The strong side and the weak side are, preferably, opposite sides of the array.

In some embodiments, the at least two of the adjacent rows of permanent magnets may be arranged in form of Halbach arrays including the strong sides and the weak sides, wherein the strong sides are arranged to face the at least one row of coils. Furthermore, magnetic poles of the adjacent rows of permanent magnets may be arranged to align with respect to each other.

In some embodiments, the linear motor may comprise at least two adjacent sets of one row of coils and two adjacent rows of permanent magnets. Thus, the linear motor may comprise, for example, two adjacent rows of coils which are respectively sandwiched between two rows of permanent magnets, of which one, two, or even all of them may be arranged partly or completely in form of Halbach arrays.

In various embodiments, the plurality of non-magnetic core coils may be arranged in at least two adjacent rows of coils in the longitudinal direction of the one of the stator and the mover, wherein the rows are arranged to be separated by a second gap. Furthermore, the permanent magnets may be arranged in at least three adjacent rows of permanent magnets in the longitudinal direction of the other of the stator and the mover, wherein the adjacent rows of permanent magnets are separated by gaps dimensioned for receiving the at least two adjacent rows of coils, respectively. Thus, two of the adjacent rows of permanent magnets are outermost rows and at least one of the adjacent rows of permanent magnets is a middle row. Further still, one or both of the outermost rows may be arranged in form of Halbach arrays including strong sides and weak sides, wherein each of the strong sides may be arranged to face one of the at least two rows of coils. Magnetic poles of the adjacent rows of permanent magnets may, preferably, be arranged to align with respect to each other.

In some embodiments, the permanent magnets of the at least one middle row may comprise two portions separated in the direction of motor normal N by a support portion of ferromagnetic material. The magnetic poles of the two portions are arranged to align. The two portions may thus substantially sandwich the support portion.

The second gap must also be dimensioned such that it enables movement of the rows of permanent magnets and the rows of coils relative to each other. Thus, in various embodiments, there is an air gap between said rows.

In addition, in the at least one middle row, the permanent magnets, such as typical permanent magnets which may not be in the form of a Halbach array, may be arranged by turns with reversed magnetic poles in the direction of motor normal, and to have magnetic poles of the permanent magnets aligned with the magnetic poles of the permanent magnets of the outermost rows.

In various embodiments, coil openings, or particularly surface normals thereof, of the plurality of non-magnetic core coils may be arranged in a direction of motor normal, or to face in said direction, for providing main flux in a transverse direction of the stator.

Alternatively or in addition, the permanent magnets in the adjacent rows may be arranged by turns with reversed magnetic poles in the direction of motor normal, and having magnetic poles of the adjacent rows of permanent magnets aligned with respect to each other.

In various embodiments, the non-magnetic core coils may have been manufactured by additive manufacturing.

In some embodiments, the non-magnetic core coils may be tilted with respect to a perpendicular direction relative to both the longitudinal direction and a motor normal, for example, the non-magnetic core coils being tilted with respect to a first direction.

In various embodiments, the stator may comprise, in the longitudinal direction of the stator, the plurality of air core coils arranged in two adjacent rows separated by a gap, and wherein the mover may comprise permanent magnets arranged in three adjacent rows separated by two gaps dimensioned to receive the air core coils.

According to a second aspect, an elevator is provided. The elevator may comprise an elevator shaft and an elevator car adapted to move in the elevator shaft, wherein the elevator comprises a linear motor according to the first aspect.

In various embodiments, the elevator shaft may be equipped with a charging station comprising at least one second coil and a power stage to modulate the at least one second coil. The at least one, or a plurality of, second coil(s) may be arranged to be located adjacent to at least one of the non-magnetic core coils, such as air core coils, to face the at least one of the non-magnetic core coils when the elevator car is present at the charging station. The non-magnetic core coils are optionally arranged to the mover. Furthermore, the power stage is configured to modulate the at least one second coil when the elevator car is present at the charging station for transferring electrical power wirelessly between, such as from the at least one second coil to the non-magnetic core coil.

Alternatively or in addition, the elevator shaft may be equipped with a direction changing position comprising at least one third coil arranged to align with the plurality of non-magnetic core coils of the one of the stator and the mover when the elevator car is present at the direction changing position, thereby enabling the wireless power transfer between the non-magnetic core coils and the at least one third coil. The elevator shaft may further comprise equipment including an actuator configured for changing movement direction of the elevator car. Thereby electrical power may be supplied therebetween, particularly from the non-magnetic core coils via the third coil to the actuator.

The present invention provides a linear motor and an elevator. The present invention provides advantages over known solutions in that the stator or the mover becomes lighter and less costly due to having coils with non-magnetic cores, such as air core coils. Furthermore, the utilization of non-magnetic cores decreases the amount of transverse forces in the motor.

Furthermore, in some preferable embodiments, by utilizing a Halbach array, a much higher propulsion force density per magnet material may be achieved than in the known solutions in which Halbach arrays are not used. By utilizing Halbach arrays, thinner magnets may be used to produce the same force compared to conventional permanent magnets.

Various other advantages will become clear to a skilled person based on the following detailed description.

The expression "a plurality of" may refer to any positive integer starting from two (2), that is, being at least two.

The terms "first", "second" and "third" are herein used to distinguish one element from other element, and not to specially prioritize or order them, if not otherwise explicitly stated.

The exemplary embodiments of the present invention presented herein are not to be interpreted to pose limitations to the applicability of the appended claims. The verb "to comprise" is used herein as an open limitation that does not exclude the existence of also unrecited features. The features recited in depending claims are mutually freely combinable unless otherwise explicitly stated.

The novel features which are considered as characteristic of the present invention are set forth in particular in the appended claims. The present invention itself, however, both as to its construction and its method of operation, together with additional objectives and advantages thereof, will be best understood from the following description of specific embodiments when read in connection with the accompanying drawings.

### BRIEF DESCRIPTION OF FIGURES

Some embodiments of the invention are illustrated by way of example, and not by way of limitation, in the figures of the accompanying drawings.
Figure 1 illustrates schematically an elevator according to an embodiment of the present invention.
Figures 2A and 2B illustrate schematically a linear motor according to an embodiment of the present invention.
Figures 3A and 3B illustrate schematically a linear motor according to an embodiment of the present invention.
Figures 4A-4D illustrate schematically Halbach arrays according to some embodiments of the present invention.
Figure 5 illustrates schematically a linear motor according to an embodiment of the present invention.
Figure 6 illustrates schematically a linear motor and a wireless charging arrangement according to an embodiment of the present invention.
Figure 7 illustrates schematically an elevator according to an embodiment of the present invention.

### DETAILED DESCRIPTION OF SOME EMBODIMENTS

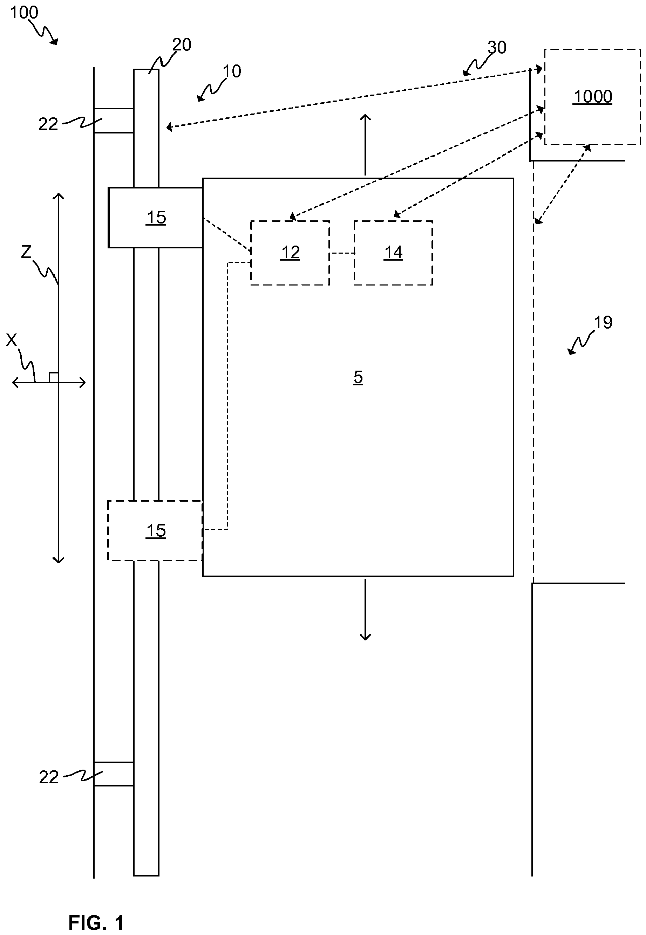

Figure 1 illustrates schematically an elevator 100 according to an embodiment of the present invention. The elevator 100 may, preferably, comprise a linear motor 10 arranged to be utilized for moving an elevator car 5 or cars 5 in the elevator shaft 30 of the elevator 100. The linear motor 10 may comprise a stator 20 and a mover 15 adapted to move along the stator 20. In addition, the stator 20 may have support portions 22 for attaching the stator 20 to a structure of the elevator shaft 30, such as to a wall thereof.

The elevator 100 may comprise a plurality of landing floors 19, such as having landing floor doors, which the elevator car 5 or cars 5 may be arranged to serve.

However, even though in Fig. 1 shows an elevator 100 in which the elevator car 5 is arranged to be moved vertically, various embodiments of the present invention may alternatively be implemented in a conveyor, such as an escalator, in a moving walk, or in an inclined elevator, or in a multi-car elevator having various vertical and horizontal paths along which the elevator car 5 or cars 5 have been arranged to be moved.

In various embodiments, the linear motor 10 may comprise one stator 20 or a plurality of stators 20. Furthermore, there may be one mover 15 or, preferably, a plurality of movers 15 arranged to be coupled to the elevator car 10 for moving the elevator car 10 along the stator or stators 20. Details of the linear motor 10 according to some embodiments of the present invention will be described hereinbelow.

The elevator 100 may, in addition, comprise an elevator control unit 1000. The elevator control unit 1000 may, preferably, be at least communicatively and, optionally, electrically, coupled to various components and sub-systems of the elevator 100, as illustrated in Fig. 1, for instance. The elevator control unit 1000 may further comprise one or more processors, one or more memories being volatile or non-volatile or non-transitory for storing portions of computer program code and any data values and possibly one or more user interface units. The mentioned elements may be communicatively coupled to each other with e.g. an internal bus.

The processor of the elevator control unit 1000 may be configured to implement various tasks related to the operation of the elevator 100. The implementation of the method may be achieved by arranging the processor to execute at least some portion of computer program code stored in the memory causing the processor, and thus the elevator control unit 1000, to perform various tasks related to the operation of the elevator 100. The processor is thus arranged to access the memory and retrieve and store any information therefrom and thereto. For sake of clarity, the processor herein refers to any unit suitable for processing information and control the operation of the elevator control unit 1000, among other tasks. The operations may also be implemented with a microcontroller solution with embedded software. Similarly, the memory is not limited to a certain type of memory only, but any memory type suitable for storing the described pieces of information may be applied in the context of the present invention.

In Fig. 1, the mover 15 or movers 15 have been coupled to the elevator car 5 for moving the elevator car 5 along the stator 20 and thus the elevator shaft 30. The mover(s) 15 may be arranged to comprise the non-magnetic core coils, such as air core coils. Furthermore, the stator 20 or a plurality of stators 20 may comprise permanent magnets arranged thereto. Furthermore, the elevator car 10 may comprise an electrical converter unit 12, such as comprising a frequency converter or an inverter, for controlling to operation of the mover 15, such as injecting and controlling current in the coils of the mover(s) 15, thereby controlling the movement of the elevator car 5 along the stator(s) 20. Still further, the elevator car 5 may comprise an electrical energy storage 14, such as a battery or batteries and/or supercapacitors. The electrical energy storage 14 may be connected to the electrical converter unit 12, such as to the intermediate circuit of the frequency converter, to the input of the frequency converter, or to the input of the inverter, for instance. The electrical energy storage 14 may advantageously be designed to be the primary source of electrical power for moving the elevator car 5.

Alternatively, the stator 20 or stators 20 may comprise the non-magnetic core coils, such as air core coils. Furthermore, the mover 15 may comprise permanent magnets arranged thereto. In such cases, the non-magnetic core coils may be controlled by an electrical converter or converters arranged to the elevator shaft.

The mover 15 or movers 15 may be arranged to the back wall of the car 5, that is to provide a rucksack type elevator car, or, alternatively, the mover 15 or movers 15 may be arranged to side wall or walls of the elevator car 5.

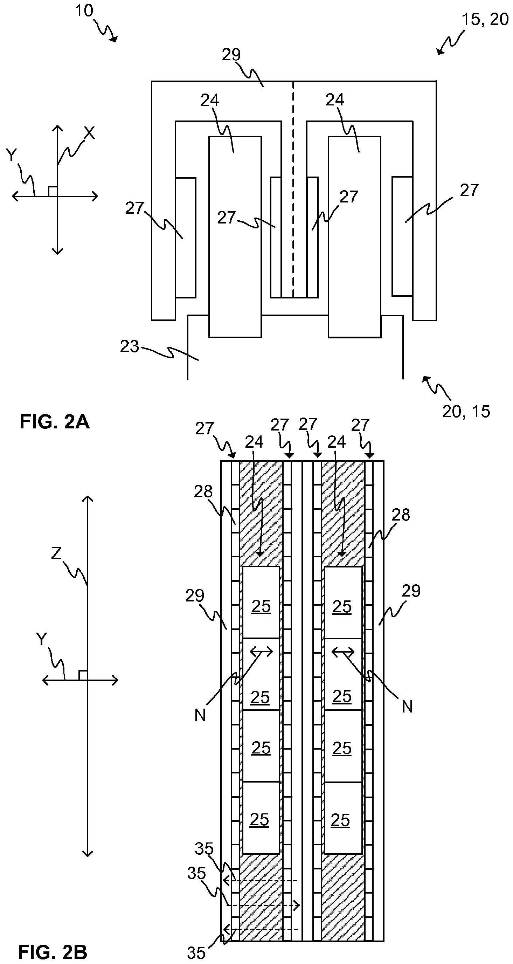

Alternatively, the elevator 100 may comprise guide rail or rails (not shown) and elevator car 5 may be provided with guide shoes (not shown), such as sliding shoes or rotating guide rollers, arranged to control the lateral movement of the elevator car 5, that is movement in the first X and/or the second Y directions (the second direction Y being shown in Fig. 2A, for instance). The guide rails / guide shoes may be such as known to a person skilled in the art.

There may or may not be a counterweight coupled to the elevator car 5 being utilized in various embodiments of the present invention.

Figures 2A and 2B illustrate schematically a linear motor 10 according to an embodiment of the present invention. One of the stator 20 and the mover 15 may comprise a plurality of non-magnetic core coils 25, such as air core coils, arranged in at least one row of coils 24, preferably in at least two rows of coils 24, in a longitudinal direction Z of the one of the stator 20 and the mover 15. In Fig. 2A, the coils 25 are, preferably, arranged to the mover 15 which is further coupled to the elevator car 5. The coils 25 may be coupled to a coil support 23 and, optionally, further to the elevator car 5. The stator 20 or the mover 15 becomes lighter and less costly with respect to the known solutions due to having coils with non-magnetic cores, such as air core coils. Furthermore, the utilization of non-magnetic cores decreases the amount of transverse forces in the motor 10.

The coil openings of the plurality of non-magnetic core coils 25 may, preferably, be arranged in a direction of motor normal N for providing main flux in a transverse direction of the stator 20, in Figs. 2A and 2B substantially in a second direction Y.

The first direction X is preferably substantially perpendicular relative to both the longitudinal direction Z and the second direction Y.

Furthermore, in Figs. 2A and 2B, the other of the stator 20 and the mover 15 may comprise permanent magnets 28 arranged in at least two adjacent rows of permanent magnets 27 in a longitudinal direction Z of the other of the stator 20 and the mover 15, wherein the adjacent rows of permanent magnets 27, preferably in at least four rows of permanent magnets 27 depending on the number of rows of coils 24, are separated by a gap dimensioned for receiving the at least one of row of coils 24. The permanent magnets 28 may be coupled to a magnet support 29 and, preferably, further to a structure of the elevator shaft 30. As can be seen in Figs. 2A and 2B, each row of coils 24 is being sandwiched between two rows of permanent magnets 27. Therefore, the stator 20 or the mover 15 may comprise, for example, one or two adjacent sets of one row of coils 24 and two adjacent rows of permanent magnets 27.

The permanent magnets 28 in the adjacent rows 27 may, preferably, be arranged by turns with reversed magnetic poles in the direction of motor normal N, and having magnetic poles of the adjacent rows of permanent magnets 27 aligned with respect to each other. The magnetic poles being reversed in turns is illustrated in a non-limiting example in Fig. 2B by arrows 35. Furthermore, the magnetic poles of each one of the adjacent rows of permanent magnets 27 may be aligned with respect to each other.

The linear motor 10 may thus be operated by injecting alternating current to the plurality of non-magnetic core coils 25 which generate an electromagnetic coupling, or traveling magnetic field, with the permanent magnets 28, and therefore enables movement of the stator 20 and the mover 15 relative to each other as is known per se. Known control methods, such as vector or field-oriented control may be utilized.

Furthermore, in various embodiments, at least one, preferably at least two, of the rows of permanent magnets 27 may be arranged, at least partly or substantially completely, in a form of Halbach array including a strong side and a weak side, the strong side facing the at least one row of coils 24.

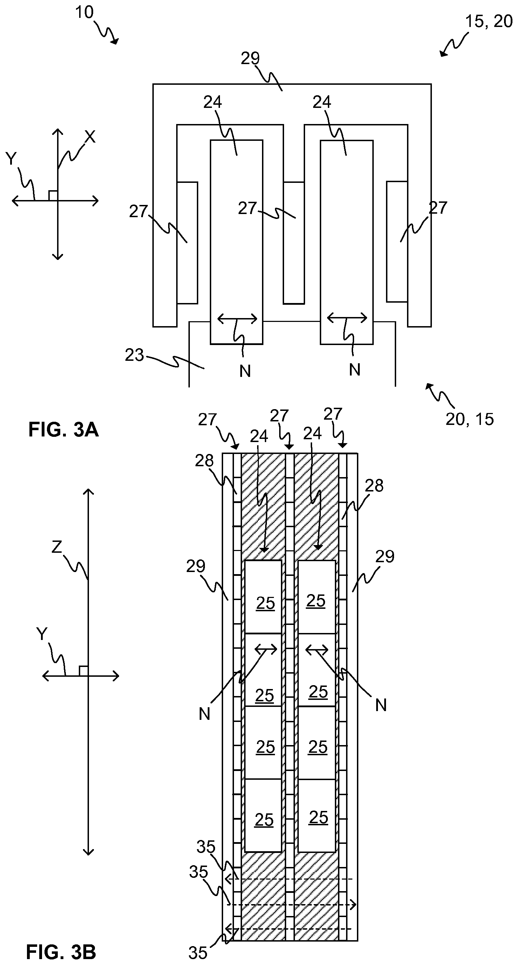

Figures 3A and 3B illustrate schematically a linear motor 10 according to an embodiment of the present invention. One of the stator 20 and the mover 15 may comprise a plurality of non-magnetic core coils 25, such as air core coils, arranged in at least two rows of coils 24 in a longitudinal direction Z of the one of the stator 20 and the mover 15; the rows 24 being separated by a gap. In Fig. 3A, the coils 25 are, preferably, arranged to the mover 15 which is further coupled to the elevator car 5. The coils 25 may be coupled to a coil support 23 and, optionally, further to the elevator car 5. The stator 20 or the mover 15 becomes lighter and less costly with respect to the known solutions due to having coils with non-magnetic cores, such as air core coils. Furthermore, the utilization of non-magnetic cores decreases the amount of transverse forces in the motor 10.

The coil openings of the plurality of non-magnetic core coils 25 may, preferably, be arranged in a direction of motor normal N for providing main flux in a transverse direction of the stator 20, in Figs. 3A and 3B substantially in a second direction Y.

Furthermore, in Figs. 3A and 3B, the other of the stator 20 and the mover 15 may comprise permanent magnets 28 arranged in at least three adjacent rows of permanent magnets 27 in a longitudinal direction Z of the other of the stator 20 and the mover 15, wherein the adjacent rows of permanent magnets 27 are separated by gaps dimensioned for receiving the at least two of rows of coils 24, respectively. The permanent magnets 28 may be coupled to a magnet support 29 and, preferably, further to a structure of the elevator shaft 30. As can be seen in Figs. 3A and 3B, the permanent magnets 28 are arranged in at least three adjacent rows of permanent magnets 27 in the longitudinal direction Z of the other of the stator 20 and the mover 15, wherein the adjacent rows of permanent magnets 27 are separated by gaps dimensioned for receiving the at least two adjacent rows of coils 24, respectively. Furthermore, as can be seen in Figs. 3A and 3B, two of the adjacent rows of permanent magnets 27 are outermost rows and at least one of the adjacent rows of permanent magnets 27 is a middle row. In the at least one middle row, the permanent magnets 28 may be arranged by turns with reversed magnetic poles in the direction of motor normal N, and may have magnetic poles of the permanent magnets 28 aligned with the magnetic poles of the permanent magnets 28 of the outermost rows.

In some embodiments, the permanent magnets 28 of the at least one middle row may comprise two portions separated in the direction of motor normal N by a support portion of ferromagnetic material. The magnetic poles of the two portions are arranged to align.

The permanent magnets 28 in the adjacent rows 27 may, preferably, be arranged by turns with reversed magnetic poles in the direction of motor normal N, and having magnetic poles of the adjacent rows of permanent magnets 27 aligned with respect to each other. The magnetic poles being reversed in turns is illustrated in a non-limiting example in Fig. 2B by arrows 35.

The linear motor 10 may thus be operated by injecting alternating current to the plurality of non-magnetic core coils 25 which generate an electromagnetic coupling, or traveling magnetic field, with the permanent magnets 28, and therefore enables movement of the stator 20 and the mover 15 relative to each other as is known per se. Known control methods, such as vector or field-oriented control may be utilized.

Furthermore, in various embodiments at least the outermost rows of permanent magnets 27 may be arranged in a form of Halbach array including a strong side and a weak side, the strong side facing one of the at least two rows of coils 24.

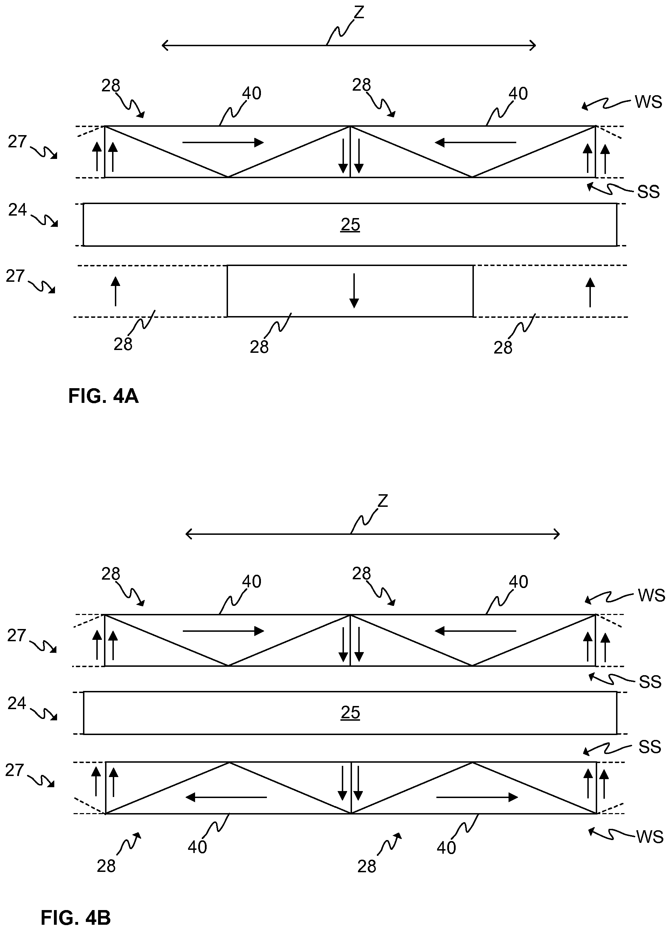

Figures 4A-4D illustrate schematically Halbach arrays 40 according to some embodiment of the present invention. The Halbach array 40 may be comprised in at least one of the rows of permanent magnets 27 as described hereinbefore. A portion of a row of non-magnetic core coils 24 has been shown in Figs. 4A-4D to illustrate the orientation of the Halbach arrays 40 relative to the row of coils 24 in accordance with various embodiments of the present invention.

Figure 4A illustrates schematically Halbach arrays 40 as a part of the linear motor 10 according to an embodiment of the present invention. In Fig. 4A, one of the rows of permanent magnets 27 is arranged in form of Halbach arrays including the strong side SS and the weak side WS, wherein the strong side SS is arranged to face the at least one row of coils 24. The magnetic poles of the row of permanent magnets 27 in the form of Halbach arrays is arranged to align with the magnetic poles of the row of permanent magnets 27 on the opposite side of the at least one row of coils 24.

Figure 4B illustrates schematically Halbach arrays 40 as a part of the linear motor 10 according to an embodiment of the present invention. In Fig. 4B, two of the rows of permanent magnets 27 are arranged in form of Halbach arrays including the strong sides SS and the weak sides WS, wherein the strong sides SS are arranged to face the at least one row of coils 24. The magnetic poles of the rows of permanent magnets 27 in the form of Halbach arrays are arranged to align with respect to each other.

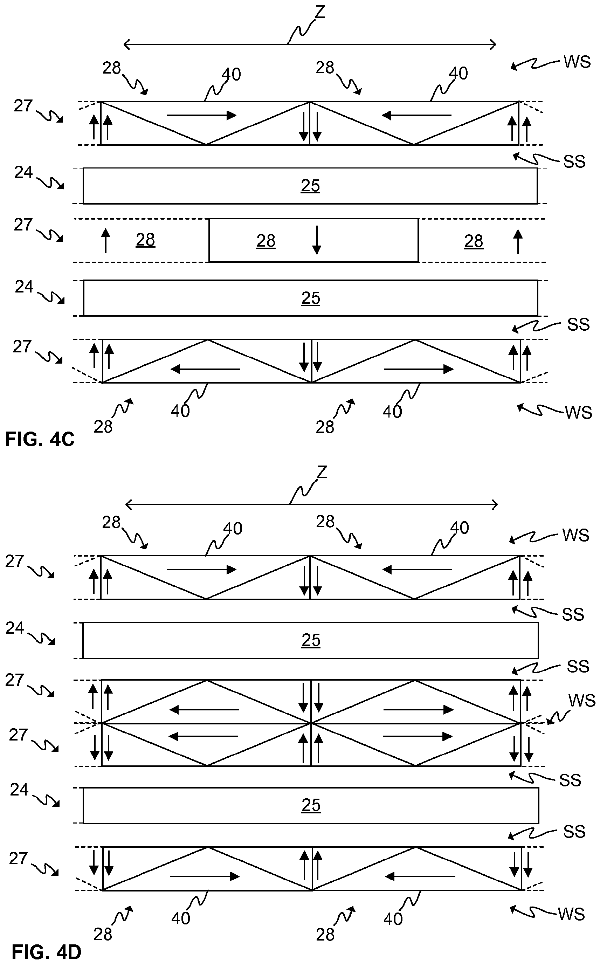

Figure 4C illustrates schematically Halbach arrays 40 as a part of the linear motor 10 according to an embodiment of the present invention. In Fig. 4C, two of the three rows of permanent magnets 27, namely the outermost rows of permanent magnets 27, are arranged in form of Halbach arrays including the strong sides SS and the weak sides WS, wherein each of the strong sides SS are arranged to face one of the at least one row of coils 24. The magnetic poles of the rows of permanent magnets 27 in the form of Halbach arrays are arranged to align with respect to each other. Furthermore, one of the three rows of permanent magnets 27, that is the middle row, may be arranged by turns with reversed magnetic poles in the direction of motor normal N, and having magnetic poles of the middle row 27 aligned with the magnetic poles of the outermost rows 27. Thus, Fig. 4C illustrates an example of the linear motor 10 comprising two adjacent rows of non-magnetic core coils 24 separated by a gap.

Figure 4D illustrates schematically Halbach arrays 40 as a part of the linear motor 10 according to an embodiment of the present invention. In Fig. 4D, each one of the four rows of permanent magnets 27 are arranged in form of Halbach arrays including the strong sides SS and the weak sides WS, wherein each of the strong sides SS are arranged to face one of the at least one row of coils 24. The magnetic poles of the rows of permanent magnets 27 in the form of Halbach arrays are arranged to align with respect to each other with respect to one row of coils 24, that is, the magnetic poles of the rows of permanent magnets 28 sandwiching one of the rows of coils 24. Thus, Fig. 4D illustrates another example of the linear motor 10 comprising two adjacent rows of non-magnetic core coils 24 separated by a gap.

Regarding Figs. 4A-4D, a much higher propulsion force density per magnet material may be achieved than in the known solutions in which Halbach arrays are not used. This is beneficial especially if the stator 20 has magnetic poles made of permanent magnets because the total magnetic material consumption can be reduced. Alternatively, the permanent magnet pole structure may be used in the mover 15, i.e. in a reverse solution wherein permanent magnet poles are disposed in the mover 15 and the non-magnetic core coils 28, such as air core coils, in the stator 20. By utilizing Halbach arrays 40, thinner magnets may be used to produce the same force compared to conventional permanent magnets.

The structure in accordance with any one of Figs. 4A-4D may, however, not necessarily, be utilized in the elevator 100 of Fig. 1, if permanent magnets 28 in the form of Halbach arrays 40 are being used.

Furthermore, the structure shown in Fig. 4D may especially be utilized in the linear motor 10 of Figs. 2A and 2B, if permanent magnets 28 in the form of Halbach arrays 40 are being used.

Still further, the structure shown in Fig. 4C may especially be utilized in the linear motor 10 of Figs. 3A and 3B, if permanent magnets 28 in the form of Halbach arrays 40 are being used.

In various embodiments, in the linear motor 10 with or without Halbach array(s) 40, the non-magnetic core coils 25 may be manufactured by additive manufacturing, such as by 3D printing. This provides advantages in that the additively manufactured coils enable manufacturing space efficient machinery, simpler structure, and it further facilitates heat optimization of the coils 25.

By 3D printing the conductive materials, such as copper, and the insulation material, such as between the turns of the coil(s), a solid structure is possible to be manufactured which can carry loads without additional strengthening structures. In the conventional coils, to achieve a tight radius in the inner curves, a small diameter wire needs to be used. This challenge is overcome by utilizing 3D printing. 3D printing enables the use of space more efficiently as the center hole and distance between coils can be minimized and the coil ends can be shortened. 3D printing can also enable the use of bigger cross-section area of conductive material, such as copper, and vary the cross-section so that loss distribution can be optimized.

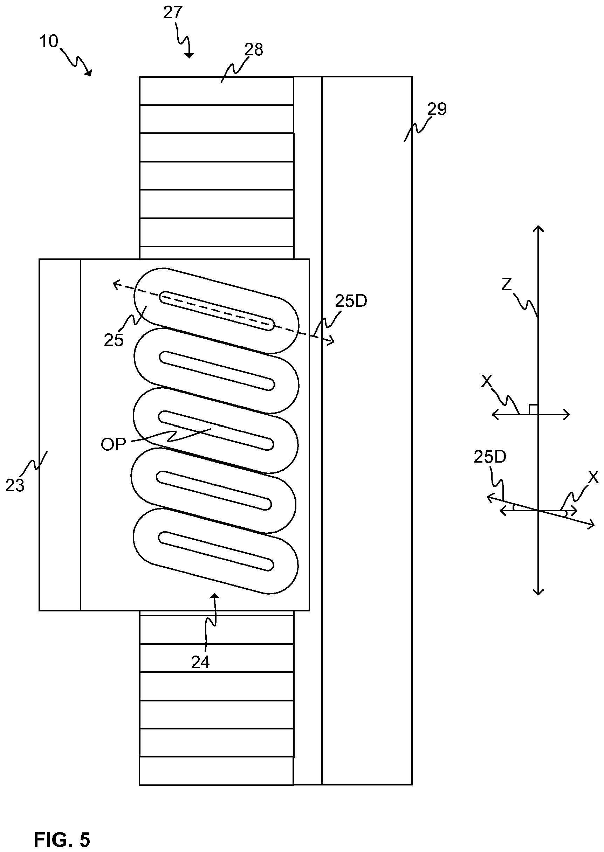

Figure 5 illustrates schematically a linear motor 10, or at least a part thereof, according to an embodiment of the present invention. In Fig. 5, one row of permanent magnets 27 is shown behind one row of non-magnetic core coils 24. It is to be understood that there can be another row of permanent magnets 27 arranged to sandwich the row of coils 24, or the motor 10 can comprise two or more rows of coils 24, such as described hereinbefore with respect to Figs. 2A-4D. Furthermore, the rows of permanent magnets 27 may comprise, however not necessarily, a Halbach array 40 or arrays 40.

Regarding Fig. 5, the coils 25 are arranged to be tilted (see arrow 25D) with respect to a first direction X such that guide forces will minimize, that is the force required by the guide element(s), such as in connection with the guide rail(s). In various embodiments, wherein the movers 15 are arranged to the elevator car 5 such as to provide a rucksack type elevator car (movers 15 arranged to the back wall of the elevator car 5), the weight creates guide forces which can affect the ride comfort. By arranging the coils 25 tilted, a force component can be generated which reduce guiding forces. The tilting may be at least 5 degrees, preferably at least 10 degrees, or even at least 15 or 20 degrees. Thus, the benefit of tilting the coils 25 is that the guide rails and/or related elements may be manufactured which can withstand or generate less force for guiding the elevator car 5. This may entail utilizing cheaper and/or lighter materials, for instance. Also by reducing needed guide forces, the ride comfort can be increased. Furthermore, some coil openings OP have been illustrated in Fig. 5 which may include air or non-magnetic core material.

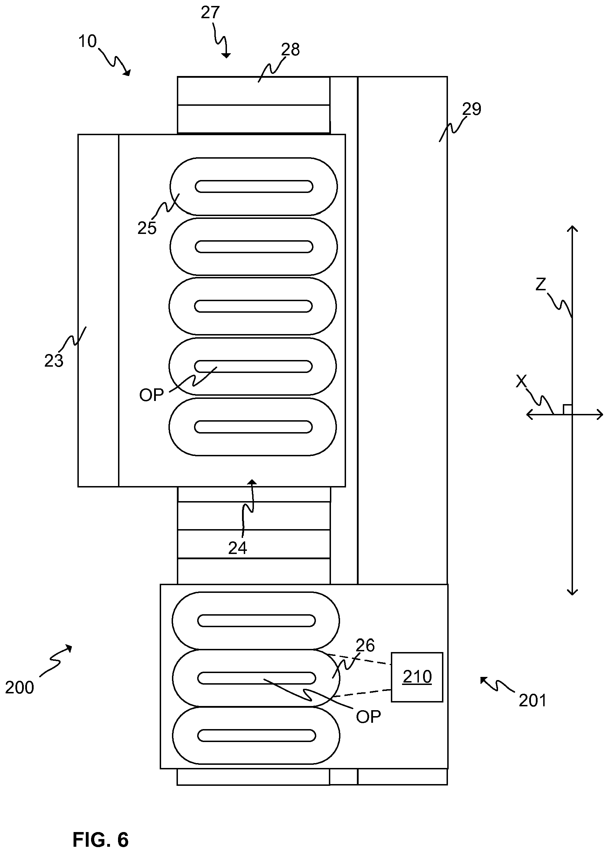

Figure 6 illustrates schematically a linear motor 10 and a wireless charging arrangement 200 according to an embodiment of the present invention. The elevator 100 may be as shown and described in and with respect to Fig. 1. The linear motor 10 may be as described and illustrated hereinbefore with respect to and/or in Figs. 2A-5, that is having a Halbach array 40 or arrays 40 and/or 3D printed coils 25, and/or tilted coils, however, not necessarily.

In Fig. 6, one of the stator 20 and the mover 15 may comprise a plurality of non-magnetic core coils 25, such as air core coils, arranged in at least one row of coils 24 in a longitudinal direction Z of the one of the stator 20 and the mover 15. Furthermore, the other of the stator 20 and the mover 15 may comprise permanent magnets 28 arranged in at least two adjacent rows of permanent magnets 27 in a longitudinal direction Z of the other of the stator 20 and the mover 15, wherein the adjacent rows of permanent magnets 27 are separated by a gap dimensioned for receiving the at least one of row of coils 24. Furthermore, some coil openings OP, especially with respect to the non-magnetic core coils 25, have been illustrated in Fig. 6. The second coils 26 may in some cases include core material in the coil opening OP.

Furthermore, the other of the stator 20 and the mover 15 comprising the permanent magnets 28 arranged in at least two adjacent rows of permanent magnets 27 may further comprise, in the wireless charging arrangement 200, at least one second coil 26. In some embodiments, the at least one, or a plurality of, second coil(s) 26 may be similar, non-magnetic core coils, such as air core coils, as in the one of the stator 20 and the mover 15, that is second non-magnetic core coils.

The coil(s) 26 may preferably be arranged to align with the plurality of non-magnetic core coils 25 of the one of the stator 20 and the mover 15 at a charging station 201 or stations 201, thereby enabling the wireless power transfer between the non-magnetic core coils 25 and the second, optionally non-magnetic core, coil(s) 26. The wireless charging arrangement 200 provides the advantage that there is no need to provide separate charging coils to said one of the stator 20 and the mover 15 comprising the plurality of non-magnetic core coils 25 which saves space and is cost-efficient.

In an embodiment, the mover 15 is provided with the non-magnetic core coils 25 and the stator 20 is provided with permanent magnets. Charging station 201 comprises the second, optionally non-magnetic core, coil(s) 26 and a charger, which comprises a power stage 210 (e.g. solid state switches arranges in a H-bridge) coupled to the second coil(s) 26. The second coil(s) 26 may be located outside of the outermost rows of the permanent magnets, such that the outermost rows of the permanent magnets are disposed in a gap between the second coil(s) 26 and the non-magnetic core coils 25 of the mover 15 when the elevator car 5 has stopped to the charging station 201. In this position, the second coil(s) 26 and the non-magnetic core coils 25 are aligned such that an inductive coupling may be established between the non-magnetic core coils 25 and the second coil(s) 26. Consequently, electrical power may be supplied to the energy storage 14 of the elevator car 5 through antiparallel-connected diodes of the electrical converter unit 12 by modulating the second coil(s) 26 with the power stage 210 of the charger.

In various embodiments, the charging station 201 or stations 201 may be arranged to be located on or below the level of a landing floor 19 or floors 19.

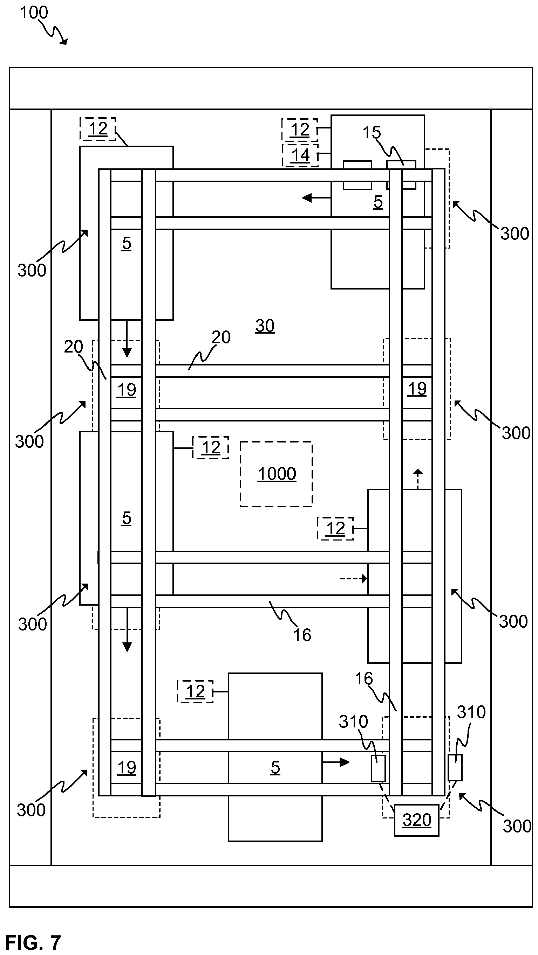

Figure 7 illustrates schematically an elevator 100 according to an embodiment of the present invention. It is to be noted that the elevator 100 illustrated in and described in connection with Fig. 1 may be part of the elevator 100 as shown in Fig. 7, and the elevator 100 of Fig. 7 may comprise a linear motor 5 as illustrated in and described in connection with Figs. 2A-6. The linear motor 5 may thus have a Halbach array 40 or arrays 40 and/or 3D printed coils 25, and/or tilted coils and/or wireless charging arrangement(s) 200, however, not necessarily.

In Fig. 7, there are preferably at least two landing floors 19, having landing floor doors or openings, comprised in the elevator 100. There may also be doors comprised in the elevator car 5. Although shown in Fig. 7 that there are two horizontally separated sets, or "columns", of vertically aligned landing floors 19, there could as well be only one column as in conventional elevators or more than two, for example, three.

Regarding the elevator shaft 30, it may be such as defining substantially closed volume in which the elevator car 5 is adapted and configured to be moved. The walls may be, for example, of concrete, metal or at least partly of glass, or any combination thereof. The elevator shaft 30 herein refers basically to any structure or pathway along which the elevator car 5 is configured to be moved.

As can be seen in Fig. 7, the elevator car 5 or cars 5 may be moved along the elevator shaft 30 vertically and/or horizontally depending on the direction of stators 20. According to embodiments similar to one in Fig. 7 in this respect, the elevator car 5 or cars 5 may be configured to be moved along a number of vertical 20 and/or horizontal 20 stators, for example, two of them such as in Fig. 7. The stators 20 are part of an electric linear motor of the elevator 100 utilized to move the elevator car 5 or cars 5 in the elevator shaft 30. The stator beams 16 may, preferably, be arranged in fixed manner, that is, stationary with respect to the elevator shaft 13, for example, to a wall of the shaft by support portions 22, which may be arranged to rotatable at direction changing positions 300 of the elevator car 5. Fig. 7 illustrates eight direction changing positions 300 in which the movement direction of the elevator car 5 may be changed.

In similar manner as described in connection with Fig. 6 hereinbefore, the direction changing positions 300 may comprise, in connection with the other of the stator 20 and the mover 15 comprising the permanent magnets 28 arranged in at least two adjacent rows of permanent magnets 27, at least one third coil 310. The at least one third coil 310 may be, optionally, similar with respect to the non-magnetic core coils 25, such as air core coils, as the one of the stator 20 and the mover 15 or being arranged in similarly as the second coil(s) 26 in Fig. 6. The third, optionally non-magnetic core, coil(s) 310 are preferably arranged to align with the plurality of non-magnetic core coils 25 of the one of the stator 20 and the mover 15 at the direction changing positions 300, thereby enabling the wireless power transfer between the non-magnetic core coils 25 and the third coil(s) 310. The direction changing positions 300 provides the advantage that there is no need to provide separate wireless power transfer coils to said one of the stator 20 and the mover 15 comprising the plurality of non-magnetic core coils 25 which saves space and is cost-efficient. In various embodiments, the electrical energy storage 14 may, via the electrical converter unit 12, be utilized to operate the equipment at the direction changing positions 300.

The equipment at the direction changing positions 300 may in some embodiments comprise, for example, an actuator 320 or actuators 320 configured to rotate stator 20 or stators 20 for one position to another in order to change the movement direction of the elevator car 5. According to one example, the elevator car 5 may be moved to a direction changing position 300 in vertical direction, then stopped at the position 300. Subsequently, the actuator 320 or actuators 320 may be arranged to rotate while substantially simultaneously rotating the mover(s) 15 of the elevator car 5. The actuator 320 or actuators 320 may be operated by providing electrical power between the non-magnetic core coils 25 of the linear motor 10 and the third, optionally non-magnetic core, coil(s) 310 at the direction changing position 300.

In an embodiment, the mover 15 is provided with non-magnetic core coils 25, and the stator 20 is provided with permanent magnets, and actuators 320 are provided with additional power transfers coils, such as third coils 310. The power transfer coils are located aligned with the non-magnetic core coils 25 when the elevator car 5 is in the direction changing position 300. In this position 300, inductive coupling is established between the non-magnetic core coils 25 and the additional power transfer coils, and electrical power may be supplied to the actuator 320 from the energy storage 14 of the elevator car 5, by modulating the non-magnetic core coils 25 with electrical converter unit 12.

In case of a non-limiting example, a linear motor 10 may comprise a stator 20 and a mover 15 adapted to move along the stator 20. One of the stator 20 and the mover 15, for example, the one being the mover 15, comprises a plurality of non-magnetic core coils 25, such as air core coils, arranged in at least one row of coils 24 in a longitudinal direction Z of the one of the stator 20 and the mover 15. The other of the stator 20 and the mover 15, for example the other being the stator 20, may comprise permanent magnets 28 arranged in at least two adjacent rows of permanent magnets 27 in a longitudinal direction Z of the other of the stator 20 and the mover 15, wherein the adjacent rows of permanent magnets 27 are separated by a gap dimensioned for receiving the at least one of row of coils 24. The non-magnetic core coils 25 have advantageously been manufactured by additive manufacturing, such as by 3D printing, which provides advantages in that the additively manufactured coils enable manufacturing space efficient machinery, simpler structure, and it further facilitates heat optimization of the coils 25.

In case of another non-limiting example, a linear motor 10 may comprise a stator 20 and a mover 15 adapted to move along the stator 20. One of the stator 20 and the mover 15, for example, the one being the mover 15, comprises a plurality of non-magnetic core coils 25, such as air core coils, arranged in at least one row of coils 24 in a longitudinal direction Z of the one of the stator 20 and the mover 15. The other of the stator 20 and the mover 15, for example the other being the stator 20, may comprise permanent magnets 28 arranged in at least two adjacent rows of permanent magnets 27 in a longitudinal direction Z of the other of the stator 20 and the mover 15, wherein the adjacent rows of permanent magnets 27 are separated by a gap dimensioned for receiving the at least one of row of coils 24. The non-magnetic core coils 25 may advantageously be tilted with respect to a perpendicular direction relative to both the longitudinal direction Z and the direction of motor normal N, in some cases the perpendicular direction being a first direction X. Thus, the benefit of tilting the coils 25 is that the guide rails and/or related elements may be manufactured which can withstand or generate less force for guiding the elevator car 5. This may entail utilizing cheaper and/or lighter materials, for instance. Also by reducing needed guide forces, the ride comfort can be increased.

In case of a further non-limiting example, an elevator 100 may comprise a linear motor 10 which comprises a stator 20 and a mover 15 adapted to move along the stator 20. One of the stator 20 and the mover 15, for example, the one being the mover 15, may comprise a plurality of non-magnetic core coils 25, such as air core coils, arranged in at least one row of coils 24 in a longitudinal direction Z of the one of the stator 20 and the mover 15. The other of the stator 20 and the mover 15, for example the other being the stator 20, may comprise permanent magnets 28 arranged in at least two adjacent rows of permanent magnets 27 in a longitudinal direction Z of the other of the stator 20 and the mover 15, wherein the adjacent rows of permanent magnets 27 are separated by a gap dimensioned for receiving the at least one of row of coils 24. Furthermore, the elevator 100 of the example may comprise at least one second coil 26, optionally a set of second non-magnetic core coils, arranged to the one of the stator 20 and the mover 15. For example, the at least one second coil 26 may be arranged to be located on or below the level of a landing floor 19 or floors 19. The at least one second coil 26 may be preferably arranged to align with the plurality of non-magnetic core coils 25 of the one of the stator 20 and the mover 15 at a charging station 201 or stations 201, thereby enabling the wireless power transfer between the non-magnetic core coils 25 and the at least one second coil 26. The second coils 26 may, however not necessarily, be identical to the non-magnetic core coils 25. The wireless charging arrangement 200 provides the advantage that there is no need to provide separate charging coils to said one of the stator 20 and the mover 15 comprising the plurality of non-magnetic core coils 25 which saves space and is cost-efficient.

In case of a still further non-limiting example, an elevator 100 may comprise a linear motor 10 which comprises a stator 20 and a mover 15 adapted to move along the stator 20. One of the stator 20 and the mover 15, for example, the one being the stator 20, comprises a plurality of non-magnetic core coils 25, such as air core coils, arranged in at least one row of coils 24 in a longitudinal direction Z of the one of the stator 20 and the mover 15. The other of the stator 20 and the mover 15, for example the other being the mover 15, may comprise permanent magnets 28 arranged in at least two adjacent rows of permanent magnets 27 in a longitudinal direction Z of the other of the stator 20 and the mover 15, wherein the adjacent rows of permanent magnets 27 are separated by a gap dimensioned for receiving the at least one of row of coils 24. Furthermore, the elevator 100 of the further example may comprise a set of third, optionally non-magnetic core, coils 310 arranged to said one of the stator 20 and the mover 15 arranged to be located at direction changing position 300 and arranged to align with the plurality of non-magnetic core coils 25 of the one of the stator 20 and the mover 15, thereby enabling the wireless power transfer between the non-magnetic core coils 25 and the third coils 310. Optionally, the third coils 310 are identical to the non-magnetic core coils 25. The elevator 100 may further comprise equipment including an actuator 320 at the direction changing position 300 configured for changing movement direction of the elevator car 5. The direction changing positions 300 provides the advantage that there is no need to provide separate wireless power transfer coils to said one of the stator 20 and the mover 15 comprising the plurality of non-magnetic core coils 25 which saves space and is cost-efficient.

## Claims

1. A linear motor (10) comprising
a stator (20) and a mover (15) adapted to move along the stator (20);
wherein one of the stator (20) and the mover (15) comprises a plurality of non-magnetic core coils (25), such as air core coils, arranged in at least one row of coils (24) in a longitudinal direction (Z) of the one of the stator (20) and the mover (15); and
wherein the other of the stator (20) and the mover (15) comprises permanent magnets (28) arranged in at least two adjacent rows of permanent magnets (27) in a longitudinal direction (Z) of the other of the stator (20) and the mover (15), wherein the adjacent rows of permanent magnets (27) are separated by a gap dimensioned for receiving the at least one of row of coils (24); and
wherein at least one of the adjacent rows of permanent magnets (27) is arranged, at least partly or completely, in a form of Halbach array including a strong side (SS) and a weak side (WS), the strong side (SS) facing the at least one row of coils (24).

2. The linear motor (10) of claim 1, wherein the at least two of the adjacent rows of permanent magnets (27) are arranged, at least partly or completely, in form of Halbach arrays including strong sides (SS) and weak sides (WS), the strong sides (SS) facing the at least one row of coils (24).

3. The linear motor (10) of claim 1 or 2, wherein the plurality of non-magnetic core coils (25) are arranged in at least two adjacent rows of coils (24) in the longitudinal direction (Z) of the one of the stator (20) and the mover (15), the rows (24) being separated by a second gap;
wherein the permanent magnets (28) are arranged in at least three adjacent rows of permanent magnets (27) in the longitudinal direction (Z) of the other of the stator (20) and the mover (15), wherein the adjacent rows of permanent magnets (27) are separated by gaps dimensioned for receiving the at least two adjacent rows of coils (24), respectively, wherein two of the adjacent rows of permanent magnets (27) are outermost rows and at least one of the adjacent rows of permanent magnets (27) is a middle row; and
wherein one or both of the outermost rows are arranged in form of Halbach arrays including strong sides (SS) and weak sides (WS), each of the strong sides (SS) facing one of the at least two rows of coils (24).

4. The linear motor (10) of claim 3, wherein, in the at least one middle row, the permanent magnets (28) are arranged by turns with reversed magnetic poles in a direction of motor normal (N), and has magnetic poles of the permanent magnets (28) aligned with the magnetic poles of the permanent magnets (28) of the outermost rows.

5. The linear motor (10) of claim 2, comprising two adjacent sets of one row of coils (24) and two adjacent rows of permanent magnets (27).

6. The linear motor (10) of any one of the preceding claims, wherein the permanent magnets (28) in the adjacent rows (27) are arranged by turns with reversed magnetic poles in a direction of motor normal (N), and having magnetic poles of the adjacent rows of permanent magnets (27) aligned with respect to each other.

7. The linear motor (10) of any one of the preceding claims, wherein coil openings (OP) of the plurality of non-magnetic core coils (25) are in a direction of motor normal (N) for providing main flux in a transverse direction of the stator (20).

8. The linear motor (10) of any one of the preceding claims, wherein the non-magnetic core coils (25) have been manufactured by additive manufacturing.

9. The linear motor (10) of any one of the preceding claims, wherein the non-magnetic core coils (25) are tilted with respect to a perpendicular direction relative to both the longitudinal direction (Z) and a motor normal (N), such as with respect to a first direction (X).

10. The linear motor (10) of any one of the preceding claims, wherein the stator (20) comprises, in the longitudinal direction (Z) of the stator (20), the plurality of air core coils arranged in two adjacent rows (24) separated by a gap, and wherein the mover (15) comprises permanent magnets (28) arranged in three adjacent rows (27) separated by two gaps dimensioned to receive the air core coils.

11. An elevator (100) comprising an elevator shaft (30) and an elevator car (5) adapted to move in the elevator shaft (30), wherein the elevator (100) comprises a linear motor (10) of any one of the preceding claims.

12. The elevator (100) of claim 11, wherein the elevator shaft (30) is equipped with a charging station (201) comprising at least one second coil (26) and a power stage (210) to modulate the at least one second coil (26);
wherein the at least one second coil (26) is arranged to be located adjacent to at least one of the non-magnetic core coils (25), such as air core coils, to face the at least one of the non-magnetic core coils (25) when the elevator car (5) is present at the charging station (201), wherein the non-magnetic core coils (25) are optionally arranged to the mover (15);
and wherein the power stage (210) is configured to modulate the at least one second coil (26) when the elevator car (5) is present at the charging station (201).

13. The elevator (100) of claim 11 or 12, wherein the elevator shaft (30) is equipped with a direction changing position (300) comprising at least one third coil (310) arranged to align with the plurality of non-magnetic core coils (25) of the one of the stator (20) and the mover (15) when the elevator car (5) is present at the direction changing position (300), thereby enabling the wireless power transfer between the non-magnetic core coils (25) and the at least one third coil (310), and equipment including an actuator (320) configured for changing movement direction of the elevator car (5).

14. A linear motor (10) comprising
a stator (20) and a mover (15) adapted to move along the stator (20);
wherein one of the stator and the mover comprises a plurality of non-magnetic core coils, such as air core coils, arranged in at least one row of coils in a longitudinal direction of the one of the stator and the mover; and
wherein the other of the stator and the mover comprises permanent magnets arranged in at least two adjacent rows of permanent magnets in a longitudinal direction of the other of the stator and the mover, wherein the adjacent rows of permanent magnets are separated by a gap dimensioned for receiving the at least one of row of coils; and
wherein the non-magnetic core coils have been manufactured by additive manufacturing.

15. A linear motor (10) comprising
a stator and a mover adapted to move along the stator;
wherein one of the stator and the mover comprises a plurality of non-magnetic core coils, such as air core coils, arranged in at least one row of coils in a longitudinal direction of the one of the stator and the mover; and
wherein the other of the stator and the mover comprises permanent magnets arranged in at least two adjacent rows of permanent magnets in a longitudinal direction of the other of the stator and the mover, wherein the adjacent rows of permanent magnets are separated by a gap dimensioned for receiving the at least one of row of coils; and
wherein the non-magnetic core coils are tilted with respect to a perpendicular direction relative to both the longitudinal direction and a direction of motor normal.

16. An elevator (100) comprising a linear motor, the linear motor comprising:
a stator and a mover adapted to move along the stator;
wherein one of the stator and the mover comprises a plurality of non-magnetic core coils, such as air core coils, arranged in at least one row of coils in a longitudinal direction of the one of the stator and the mover; and
wherein the other of the stator and the mover comprises permanent magnets arranged in at least two adjacent rows of permanent magnets in a longitudinal direction of the other of the stator and the mover, wherein the adjacent rows of permanent magnets are separated by a gap dimensioned for receiving the at least one of row of coils; and
wherein the elevator comprises at least one second coil (26), optionally a set of second non-magnetic core coils, arranged to said one of the stator and the mover, such as arranged to be located on or below the level of a landing floor (19) or floors (19), arranged to align with the plurality of non-magnetic core coils (25) of the one of the stator (20) and the mover (15) at a charging station (201) or stations (201), thereby enabling the wireless power transfer between the non-magnetic core coils (25) and the at least one second coil (26), wherein, optionally, the second coils are identical to the non-magnetic core coils (25).

17. An elevator (100) comprising a linear motor, the linear motor comprising:
a stator and a mover adapted to move along the stator;
wherein one of the stator and the mover comprises a plurality of non-magnetic core coils, such as air core coils, arranged in at least one row of coils in a longitudinal direction of the one of the stator and the mover; and
wherein the other of the stator and the mover comprises permanent magnets arranged in at least two adjacent rows of permanent magnets in a longitudinal direction of the other of the stator and the mover, wherein the adjacent rows of permanent magnets are separated by a gap dimensioned for receiving the at least one of row of coils; and
wherein the elevator comprises a set of third non-magnetic core coils (26) arranged to said one of the stator and the mover arranged to be located at direction changing position (300) and arranged to align with the plurality of non-magnetic core coils (25) of the one of the stator (20) and the mover (15), thereby enabling the wireless power transfer between the non-magnetic core coils (25) and the third non-magnetic core coils (26), wherein, optionally, the second non-magnetic core coils are identical to the non-magnetic core coils (25), wherein the elevator further comprises equipment including an actuator (320) at the direction changing position (300) configured for changing movement direction of the elevator car (5).
